# EUROPEAN PATENT SPECIFICATION

(11) **EP 1 427 527 B1**
(45) Date of publication and mention of the grant of the patent: **13.08.2008**
(21) Application number: 02798750.2
(22) Date of filing: 20.09.2002
(51) Int. Cl.: B01J 35/02, B01J 19/00

(54) **METHOD OF PREPARING CATALYST BODIES**
VERFAHREN ZUR HERSTELLUNG VON KATALYSATORKÖRPERN
METHODE DE PREPARATION DE CORPS CATALYSEURS

(30) Priority: 20.09.2001 US 323318 P; 20.09.2001 EP 01203604
(43) Date of publication of application: 16.06.2004
(73) Proprietor: Avantium International B.V., 1014 BV Amsterdam (NL)
(72) Inventor: VAN DEN BRINK, Peter, John, NL-3972 EJ Driebergen (NL); SIJPKES, André, Harmen, NL-1338 SZ Almere (NL)
(74) Representative: Wittop Koning, Tom Hugo
(86) International application number: PCT/EP2002/010677
(87) International publication number: WO 2003/024593

(56) References cited:
- EP-A- 0 060 622
- WO-A-02/04121
- WO-A-99/00520
- DE-C- 112 116
- GB-A- 211 557
- GB-A- 294 068
- US-A- 3 888 889
- US-A- 4 376 066
- US-A- 6 101 946

## Description

The present invention relates to a method of preparing catalyst bodies, in particular catalyst flakes. Such methods are known in the art.

Conventional techniques for preparing catalyst bodies in bulk amounts comprise the steps of extrusion of a catalyst mixture, followed by drying, crushing, and sieving, thereby obtaining catalyst bodies. Alternatively, pelletising of a catalyst mixture, followed by crushing of the obtained pellets is known.

A problem that is encountered using the known methods is that when trying to manufacture small catalyst bodies the obtained catalyst bodies do not have uniform dimensions. Even if the catalyst bodies are sieved, the sieved fraction is not uniform with respect to the smallest dimension. Also, in particular if the pelletising method is used, a significant amount of material (sometimes > 70%) becomes too small after crushing in order to be used as catalyst particles. Unfortunately, direct pelletising to obtain small pellets is difficult, as this usually results in blockage of the pelletising equipment.

The above problem is particularly pertinent when the catalyst bodies are to be used in high throughput experimentation, wherein a plurality of relatively small vessels are used in parallel. High throughput experimentation is well known in the art and is used for simultaneously conducting a large number of experiments using a plurality of vessels, optionally with different reaction conditions. High throughput experimentation is used for instance in the pharmaceutical industry for the discovery and development of new and useful drugs and in the field of catalysts for the development and screening of new catalysts. High throughput experimentation and apparatuses suitable therefor are described in e.g. EP 1 001 846

In high throughput experimentation, in particular when so called continuous flow test equipment is used, the catalyst bodies should have specific dimensions, such that on the one hand the bodies fit in the vessels (having e.g. an internal diameter of 2 mm), but on the other hand are not too small such that the packed catalyst bodies lead to too high a pressure drop. In addition, it has been found that, to create a similar degree of diffusion limitation of reactants and products for each particle, the shape of the catalyst bodies should be similar and the smallest dimension of the bodies should be uniform.

A further problem of the known methods is that they can only be applied at scales of 10 g and higher, as they are bulk techniques.

British patent GB-643,109 discloses a flaked catalyst composition and its preparation, wherein the flakes comprise a metallic element in catalytic state dispersed in a solidified oleaginous substance (such as a vegetable oil) as a protective (passivating) medium. The flakes obtained according to GB-643,109 have only a fairly uniform thickness, and are therefore not suitable for use in e.g. high throughput experimentation as they do not provide for a proper continuous flow. Further, the specific dimensions and shape of the flakes obtained according to GB-643,109 are not critical, as the object of GB-643,109 is to provide a catalytic material being homogeneous in composition, e.g. having a homogeneous reduced nickel content; therefore any shape will do. Using the method of GB-643,109 it is not possible to obtain the catalyst bodies, e.g. flakes obtainable according to the present invention. Further, the method of GB-643,109 is not suitable for preparing small quantities.

US 3,888,889 discloses the preparation of catalyst bodies by preparing a mixture of molybdenum and silver compounds, which after drying is powdered and pressed into disks by applying a pressure of 3 tons. The disks are subsequently broken down.

US 4,376,066 describes the preparation of catalyst bodies having a carrier of organic material, wherein agglomerates are pressed to a cake at a pressure of at most 25 kg/cm². The catalyst bodies are subsequently punched from the said cake. The low pressure, exerted onto the cake will provide catalyst bodies that are of low internal strength, insufficient to be suitable for high throughput experimentation. Because of the limited internal strength, formation of fines will occur during the preparation of catalyst bodies therefrom; the only manner to derive catalyst bodies from such a cake is by punching the said bodies from the cake. Breaking the cake would result in unacceptable amount of fines and material loss. Further, catalyst bodies of small dimensions, i.e. of below 1 mm cannot be produced, as said bodies would easily disintegrate to fines. Also the method is not suited to produce material of pure inorganic compounds.

An even further problem of the known methods, in particular when using extrusion, is that they have limited applicability and flexibility with regard to choice of materials to be used. Often special additives are required.

Therefore, it is an object of the present invention to provide a method of preparing catalyst bodies, in particular catalyst flakes suitable for high throughput experimentation, which can economically be obtained in small amounts.

It is a further object of the present invention to provide a method for preparing catalyst bodies in particular catalyst flakes having uniform pre-selected dimensions.

It is even a further object of the present invention to provide an alternative method of preparing catalyst bodies.

The above and other objects can be achieved in a surprisingly simple and elegant manner by the present invention which provides a method of preparing catalyst bodies, in particular catalyst flakes, in particular for high throughput experimentation, wherein the method comprises the steps of:
a) preparing a mixture comprising catalyst components;
b) distributing the mixture on a substantially flat surface;
c) compressing the mixture into a substantially flat plate of uniform thickness by applying onto the mixture, obtained after step b) a pressure of at least 50 kg/cm²;
d) breaking the plate into particulates, wherein in step d) a point load is applied to a plurality of positions on the plate, the said positions being spaced from one another, the plate being broken to a particulate of dimensions, defined by the distance between the said positions.

Herewith catalyst bodies having a similar shape (i.e. thin flat flakes) and uniform thickness can be obtained in a surprisingly simple manner.

A further advantage is that the catalyst bodies can be easily and economically obtained in high yields relative to the starting material,'even if only small amounts in the order of 1 gram are desired.

Further, no special processing additives are required (as is the case when using extrusion). However, they can be used if desired to mimic large-scale extrusion.

A further advantage is that the thickness can easily be controlled and varied over a preset range of values. By varying the thickness of the plate or the volume of the mixture distributed thereon, a range of catalyst bodies can be obtained with at least one well-defined dimension, which can be varied over a given range. In this way catalyst particles with different thickness can be obtained to enable the study of the effects of diffusion of reactants and products in a catalyzed reaction.

The method according to the present invention may advantageously be used to mimic various commercial catalyst shaping processes on a minitiaturised scale.

The method according to the present invention also allows for easy automation and parallelisation.

In step a) of the method according to the present invention a mixture of catalyst components (such as the catalyst support and/or the active phase and any other additives) is prepared. This mixture may be a dry powder, slurry, solution, paste, etc. comprising the catalyst components. Also the mixture may be a mixture as normally used for the known extrusion techniques. In case the mixture is a slurry it preferably may have been processed by high shear mixing or wet grinding.

The person skilled in the art will understand that as a catalyst support, if present, any suitable support may be used, such as a support comprising silica, alumina, titania, zirconia, high surface area carbon etc. or a mixture thereof. Also any suitable active phase and/or additives may be used. Further, already synthesized catalysts, e.g. commercially available pellets or powders may be used.

Usually, a mixture is prepared from catalyst powder particles of 0.01-10 µm. If the size is larger, an extra milling step may be performed.

In step b), the mixture comprising the catalyst components is distributed on a substantially flat surface, e.g. made from a metal, a ceramic material or any other suitable material, preferably high density alumina. Especially when a suitable slurry, solution, or paste is used, this will result in a layer having a uniform thickness being formed on the flat surface.

In step c), the mixture is compressed with a pressure of at least 50 kg/cm². By exerting such a pressure onto the mixture, a rigid cake can be obtained having sufficient internal strength that can be broken into small particles of e.g. less than 1 mm, without significant formation of fines, and without punching bodies out of the pressed material being necessary.

In step d), the plate obtained in step c) is broken into a particulate, i.e. bodies, e.g. by cutting or crushing. If desired, the plate may, and preferably will, also be broken whilst it is still on the flat surface.

Further in step d), a point load is applied to a plurality of positions on the plate, the said positions being spaced from one another, the plate being broken to a particulate of dimensions, defined by the distance between the said position. By applying such a point load, the plate is locally weakened and can easily be broken, whereby a fracture line is formed between the positions where point load is applied. As a result the particles, resulting therefrom, have dimensions that are defined by the distance of the positions of the impact of the point load on the plate. Thus, particles are formed, having dimensions of at most the distance between the positions on the plate on which the point load is applied. Thus, by only applying the point load, a particulate is conveniently obtained. This in contrast to punching catalyst bodies from the plate, as such punching would imply a punching element, having a continuous circumference, defining the dimensions of the bodies. Further, by punching, in particular when small bodies are to be punched, the bodies will stick in the punching device and have to be removed there from, e.g. by exerting e.g. air pressure through the punching device. Punching also results in significant formation of fines and to loss of material, left outside the circumference of the punching device.

Preferebly, the mixture is kept on the said substantially flat surface during and between at least step b) and c). After distributing the mixture on the substantially flat surface, the said mixture is compressed on the same surface, i.e. without the need of removing the mixture distributed thereon for the subsequent compressing stept. This can be achieved by pressing the mixture with a stamp, wherein the substantially flat surface can be part of a mould (see below).

Even more preferably, step d) is also performed on the said substantially flat surface as indicated above and will be further elucidated below.

Preferably, step c) comprises static or isobaric pressing of the mixture.

Static pressing is that mode of pressing wherein a pressing device, such as a stamp stays in one position relative to the flat surface, e.g. a mould. By this a well-defined thickness is required. Isochoric pressing is that mode of pressing whereby a predefined pressure is required. The thickness may now vary slightly depending on the compression strength of the mixture, which sometimes may be undesired. On the other hand isobaric pressing allows shaping by compaction under well-defined conditions, guaranteeing the quality (e.g. strength) of the final particles.

To this end, the mixture is preferably enclosed and compressed using an open mould and a stamp. Materials for the mould and the stamp are well known to those skilled in the art. Engineering materials such as metals and polymers may be used in most cases. Preferably the mould and the stamp are made from an inert and high compression strength resistant engineering ceramic such as high density alumina or hard metals such as carbides or nitrides. The person skilled in the art will readily understand that any other compressing means may be used, such as pressing between rollers, as long as a substantially flat thin plate of uniform thickness can be obtained. Preferably, the substantially flat surface is part of the mould.

It has been found that the internal strength of the catalyst bodies can even be improved when in step c) the pressure is between 100-4000, preferably between 100-1500 kg/cm².

Preferably, in step d) the particulate is broken to an average particle size of at most 5 mm, preferably between 0.1-1.0 mm, most preferably between 0.1-0.5 mm. The skilled person will be aware of suitable techniques for breaking the plate into the suitable dimensions. Catalyst bodies of the above-mentioned dimensions are suitable for application in high-throughput experimentation and in experimentation on micro-scale.

The point-loads are preferably applied substantially perpendicular to the plate surface, in order to avoid fine formation and for optimal local weakening of the plate.

Preferably, the positions on the plate on which the point-load is applied are regularly spaced from one another. By the said regular spacing, particulate of uniform dimensions can be obtained. E.g. when the said positions are spaced 1 mm from one another, the particulate will, after breaking of the plate thus treated, have a length and width of 1 mm. The size of the particulate can easily be chosen by choosing the corresponding distance of the positions on the plate whereon the point load is to be exerted. The spatial arrangement of the pointloads can be chosen in such a way as to obtain e.g. square, triangular, or hexagonal shaped particles.

Preferably, the said distance is longer than the thickness of the plate. By choosing the dimensions this way, flake shaped particulates are obtained having a length and width, being larger than the thickness. The distance between the said positions is preferably less than 5 mm, but more than 0.05 mm, more preferably between, 0.1 and 1.0 mm, most preferably between 0.1 and 0.5 mm. With such a distance, particulates are obtained having dimensions, suitable to be used in high throughput experimentation on microscale, i.e. in reaction vessels having an internal diameter of less than 2 mm.

The point-load can be applied by a single breaking element, exerting a point-load on a single position on the plate. In that case, the said element has to be moved in a controllable manner over the plate in order to exert the point load on the envisaged positions on the plate. However, the plate is preferably broken using a breaking element comprising a plurality of pointed projections, such as needles, pins, knives or the like. The pointed projections are preferably spaced at a regular distance from one another, such that a suitable dimension of the bodies (e.g. flakes) can be obtained. It has been found that use of such a breaking element comprising usually parallel and sharp projections allows bodies with specific and well defined dimensions to be obtained. Further, using this breaking element only a small amount of fines (particles smaller than 0,1 mm) are formed during crushing. With this breaking tool also a minimal fraction of oversized bodies is obtained. As a result the yield of bodies with desired dimensions is high.

Preferably, the width of the plate is at least ten times the thickness thereof, and more preferably 100 times the thickness thereof. By choosing a large plate area to plate thickness ratio, a higher yield of particles per plate can be obtained. Also, the uniformity of thickness will larger as a larger number of particles can be obtained from one plate (per pressing action).

Preferably, in step c) the mixture is compressed such, that a thickness of less than 2 mm, preferably between 0.05-1.0 mm is obtained. This particular range of plate thicknesses allows easy breaking without generating too many particles that are too small (fines), which increases the efficiency of the process. In addition, the plate thickness yields particles with at least one dimension in the preferred range that will avoid diffusion limitation to become a limiting factor during catalyst testing. Another important aspect of setting the plate thickness to a value within the preferred range is that it enables the preparation of catalyst particles with at least one well-defined, and variable dimension. By making catalyst particles with different well-defined particle size dimensions, diffusion processes can be studied.

It has been found that catalyst bodies having a uniform thickness of below 2 mm and preferably between 0.1 and 0.3 mm provide for optimal diffusion of reactants and products when used in high throughput experimentation or in other continuous flow tests.

Between steps b) and c) the mixture is preferably dried and/or calcined if appropriate or desired to remove any solvents and any other organic substances. Drying and calcination procedures are used which are mimicked from those applied commonly in industrial practice during the manufacture of catalysts. As a result preferably the mixture is calcined between 250-1200°C, more preferably between 400-600°C. Herewith, possible present organic solvents or other present organic materials (templates, additives, etc.) are removed; possible present metal salts are decomposed and oxidized to form their respective metal oxides; possible present crystal forms are transformed to more stable crystal phases (anatase is transformed by heat treatment to rutile, for example); the material is made stronger, or it becomes more resistant towards attrition. The person skilled in the art will readily understand that the drying and calcining steps may, alternatively or in addition, also be performed after the compressing step or even after the breaking step.

In case of a a slurry of solution, a drying step is preferably performed prior to applying pressure, and, optionally further heat treatment such as calcination. This will leave a homogeneously thin layer of material that can be pressed to a well-defined thin plate. For a paste (e.g. extrusion mix) several procedures can be used. If the paste settles by gravity it can be dried in a similar way to a solution of slurry. If the paste is thicker it can be pressed at low pressure before drying and the remaining crust thereafter may be pressed again at high pressure. Also the paste can be compressed as such using a suitable mould avoiding leakage.

A mixture in the form of an amount of dried powder or a crust is thus obtained.

In a preferred embodiment, the bodies are sieved, preferably such that a particle size below 5 mm, but preferably between 0.05-1.0 mm, more preferably 0.10-0.50 mm, is obtained. It has been found that such particle sizes on the one hand enable the catalyst bodies to fit in reactor vessels which are frequently used in high throughput experimentation. On the other hand these particle sizes prevent pressure drop when continuous flow is used.

Preferably, the mixture of step a) is a slurry. The advantage thereof is that slurries can easily be handled, e.g. by the use of pipettes. Another advantage is the fact that after being dosed a slurry forms a flat layer enabling a homogeneous distribution of its components material. After drying this will result in a layer of powder (or a crust) with an equal thickness over the whole layer. Consequently when pressing, this layer will be subjected to an homogeneous pressure load, and a plate of homogeneous height and consistency can be obtained.

In case a powder is used as mixture, a vibrating plate can be used to obtain a flat, even distribution of the material. Alternatively an equally flat and even distribution of the material can be obtained by putting the stamp on the powder and turning the stamp within the mould while applying a little pressure.

An important aspect of the present invention is the fact that steps b, c and d as well as the drying and/or calcination step can be carried out on one and the same flat surface. This allows easy processing of the sample.

In a very attractive embodiment, the invention provides a method for preparing a plurality of different catalyst bodies, wherein step a) comprises preparing multiple mixture comprising catalyst components, and wherein at least one, and preferably all of the steps a)-d) are performed in parallel. By the preparation of catalyst bodies in a parallel manner by using a plurality of flat surfaces, by performing one or more of the steps a)-d) simultaneously and in parallel, a huge number of different catalyst bodies can be prepared in a convenient and time effective manner.

The catalyst components preferably comprise an inorganic oxidic support, or high surface area activated carbon.

More preferably, the support is chosen from the group, consisting of silica, alumina, zirconia, titania and a mixture of two or more thereof, or carbon, all of which are commonly used as catalyst supports in industrial applications.

Preferably, the catalyst components also should be substantially free of halogens such as chlorine, fluor or bromine as this may lead to catalyst poisoning. Also Sulfur is known to be a catalyst poison.

Preferably, the particulate, obtained in step d) is substantially free of any organic material. Organic materials are thermally unstable and may lead to cooking when heated to high temperatures. Organic material can, if present in the mixture, be removed by e.g. a calcination step.

In the method according to the invention, preferably at least step b) and c) are automated, more preferably, also step d) is automated.

The person skilled in the art will understand that within the scope of the claims many modifications may be made to the method described above.

The invention also relates to an apparatus for preparing catalyst bodies according to the method of the invention, comprising a substantially flat surface, a pressing device comprising a stamp, designed to excert pressure to said substantially flat surface, and a breaking element, comprising pointed projections, the breaking element being arranged such, that the pointed projection are moveable in the direction of and substantially perpendicular to the substantially flat surface. In the apparatus, the stamp and the breaking element can be designed to be exchanged for one another; in step c) the stamp is mounted, whereas in step d) the breaking element can be mounted.

The pointed projections of the breaking element are spaced at a regular distance from one another and preferably arranged in a density of 10-50, more preferably 20-40 projections/ cm².

The inventions also relates to a breaking element, comprising a bundle of rigid pointed projections, being arranged in a density of 10-50, preferably 20-40 projections/cm². The breaking element has a surface on which the projections are mounted of between 0.5-40 cm², preferably between 2-20 cm², most preferably between 8-16 cm².

The catalyst bodies obtainable by the method according to the present invention have a well-defined, uniform thickness, while the other dimensions of the bodies may be chosen by selection of a proper breaking element and/or one or more appropriate sieves. Often and preferably the sieves will be chosen such that of the fraction aimed at the thickness is the smallest dimension.

An important aspect of the present invention is that catalyst bodies having a similar form (i.e. thin flat flakes) and uniform thickness can be obtained in a surprisingly simple manner. In this respect it is noted that crushing and sieving of catalyst bodies obtained by known methods, using e.g. extrusion, will not result in bodies having a similar form, i.e. they are not flat.

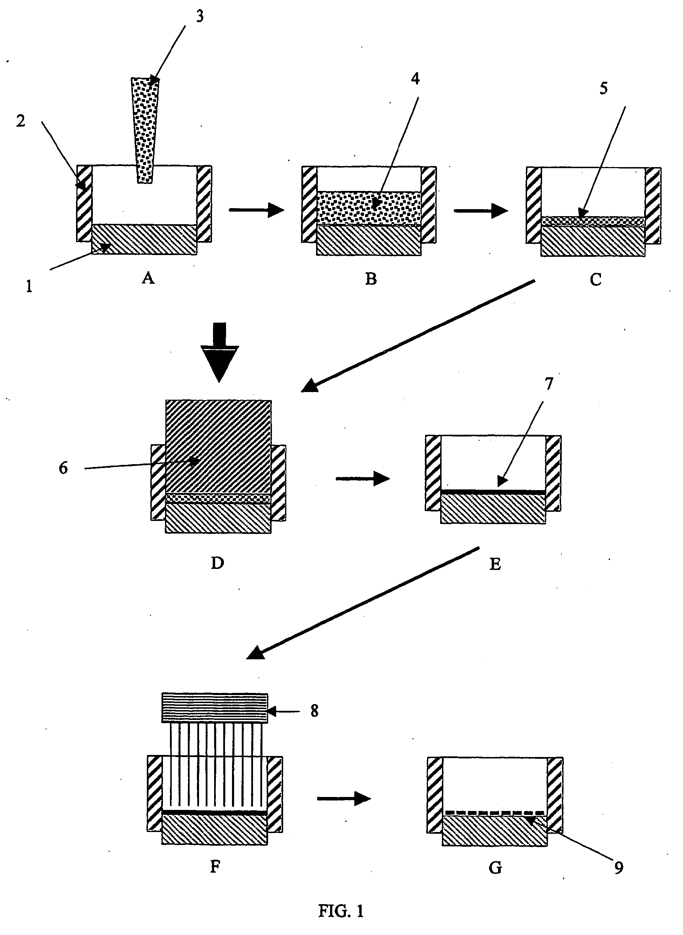

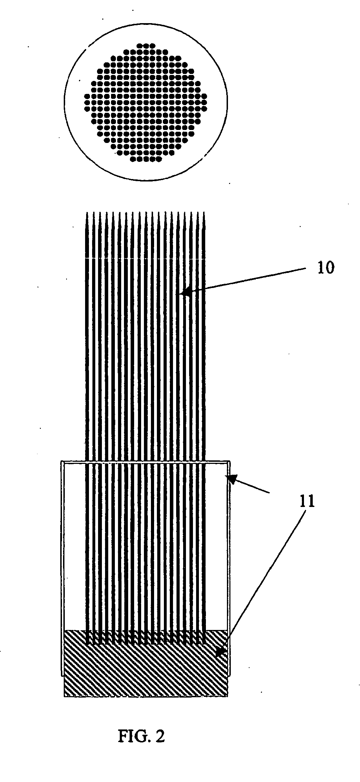

Hereinafter the invention will be illustrated in more detail by examples and drawings, wherein in fig. 1 the method is explained stepwise in a schematic overview and in fig. 2 a breaking element according to the invention is shown. The circle represents a top view of the breaking element shown thereunder.

In fig. 1A, slurry is dispensed from pipet 3 to an apparatus according to the invention, comprising a disc 1, having a flat surface in a rim 2 having a leak tight connection to the disc 1. The disc is preferably of circulair design and of a suitable fluid tight and pressure resistant material, such as sintered high density alumina. The rim can be made of a piece of silicon tubing or any suitable material such as a metal ring.

In fig. 1B the slurry 4 is dried, resulting in a crust or powder 5, depending on the nature of the slurry (fig. 1C). Hereafter, pressure is applied to the crust/powder by moving a stamp 6 in the direction of disc 1 (fig. 1D) resulting in a compressed plate 7 (fig. E). The plate is subsequently broken by a breaking element 8, comprising a bundle of needles, each having equal distance from the next needle (fig. 1F). This breaking step yields a large number of particulates 9 with substantially equal length and of equal height (fig. 1G).

Fig. 2 shows a detailed view of the breaking element according to the invention. The breaking element comprises a bundle of needles 10, spaced as a regular distance from one another. The needles are mounted on a holder 11, keeping each needle in a fixed position. The breaking element as shown has a.circulair arrangement of the needles; however, a rectangular, or any desired confirmation is possible within the scope of the invention. Preferably, the rigid projections, such as the needles, cover the substantially flat surface where upon the mixture is distributed, preferably substantially completely.

### Example 1 Preparation from slurry

An amount of 0.3 g of titania powder (crushed powder, P25, DEGUSSA, Germany) having a particle size of about 40 µm (D 50) was added to 0.9 g water to make a slurry. The slurry had a slurry concentration of 25 wt.% dry solids. The slurry was evenly distributed on a flat circular high density alumina plate of 4 cm diameter provided with a circumferential rim of 0.5 cm high.

The slurry, distributed on the flat plate and surrounded by the rim, was dried in an oven at 120°C during 1 h. Thereafter, it was calcined at 550°C during 1 h, while still resting on the circular alumina plate. Subsequently the dried and calcined slurry was closed in by positioning a stamp exactly fitting in between the rim, and a pressure of 600 kg/cm² was applied during 2 minutes. A perfectly flat thin plate having a thickness of 0,2 mm was obtained.

The thin catalyst plate was broken on the high density alumina plate using a breaking element obtaining catalyst flakes having the same thickness. The breaking element comprised a bundle of sharp needles (30 needles/cm², regularly spaced from one another) mounted onto a block of stainless steel.

It has been found that advantageous results are obtained when the number of needles is 20 to 40 needles/cm². Preferably, the distance between the needles, which determines the size of the crushed particles, is 0,2 to 0,8 mm. It has been observed that the sharper the needles, the lesser amount of fines (particles smaller than 0,1 mm) being formed during crushing.

### Example 2 Preparation from paste

An amount of 0.5 g of titania powder (crushed powder, P25, DEGUSSA, Germany) having a particle size of about 40 µm (D 50) was mixed with 0.2 g water to make a paste. The paste was put on a flat surface comprising a circular high density alumina plate of 4 cm diameter provided with a circumferential rim of 0.5 cm high.

The paste was closed in by positioning a stamp exactly fitting in between the rim, and a pressure of 100 kg/cm² was applied during 2 minutes. A perfectly flat thin plate having a thickness of about 0,3 mm was obtained. The flat paste dried at 120°C for 2 hours and calcined at 600°C for another 2 hours. During this treatment the flat thin plate still was present on the high density alumina plate. Hereafter the thin catalyst plate was broken on the high density alumina plate as described in the above example.

### Example 3 Preparation from powder

A sample of 0.3 g alumina powder (Pural BT, Condea, Germany), having an average particle size between 5 and 10 micrometer, was placed on a high density alumina dish. After applying the rim, the dish was placed on a vertical vibrating plate to obtain a homogeneously layer of powder. The thin layer of powder was compressed at 1000 kg/cm² to obtain a flat plate of about 0.2 mm thickness.

### Example 4 Parallel preparation of samples of different thicknesses.

The experiment of the example 1 was repeated with 6 different amounts of slurry (see table 1) pipetted on 6 different circular high density alumina disks. The disks were dried and calcined in parallel under the same conditions as example 1. Compressions was performed in a sequential way at 600 kg/cm² thus obtaining obtain plates with thicknesses varying between 0.1 and 0.7 mm. Such a range of flakes is ideal for measuring diffusion limitation in flow equipment.

**Table 1**

| Amount of | thickness |
|---|---|
| Slurry (g) | of plate (mm) |
| 0.6 | 0.10 |
| 1.2 | 0.21 |
| 1.8 | 0.32 |
| 2.4 | 0.43 |
| 3.0 | 0.53 |
| 3.6 | 0.64 |

## Claims

1. Method of preparing catalyst bodies, in particular catalyst flakes, in particular for high throughput experimentation, wherein the method comprises the steps of:
a) preparing a mixture comprising catalyst components;
b) distributing the mixture on a substantially flat surface;
c) compressing the mixture into a substantially flat plate of uniform thickness by applying onto the mixture, obtained after step b) a pressure of at least 50 kg/cm²;
d) breaking the plate into particulates, **characterized in that** in step d) a point load is applied to a plurality of positions on the plate, the said positions being spaced from one another, the plate being broken to a particulate of dimensions, defined by the distance between the said positions.

2. Method according to claim 1, wherein in step c) the pressure is between 100-4000, preferably between 100-1500 kg/cm².

3. Method according to any of the preceding claims, wherein in step d) the particulate is broken to an average particle size of at most 5 mm, preferably between 0.05-1.0 mm, most preferably between 0.1-0.5 mm.

4. Method according to any of the preceding claims, wherein the distance between the said positions is at most 5 mm, preferably between 0.05 and 1.0 mm, most preferably between 0.1 and 0.5 mm.

5. Method according to one or more of the preceding claims, wherein in step c) the mixture is compressed such that a thickness of less than 2 mm is obtained, preferably being between 0.05 and 0.3 mm.

6. Method according to any of the preceding claims for preparing a plurality of different catalyst bodies, wherein step a) comprises preparing multiple mixtures comprising catalyst components, and wherein at least one, and preferably all, of the steps a) - d) are performed in parallel.

7. Apparatus for preparing catalyst bodies according to any of the claims 1-6, comprising a substantially flat surface, a pressing device comprising a stamp, designed to exert a pressure onto the said substantially flat surface, and a breaking element, comprising pointed projections, the breaking element being arranged such that the pointed projections are moveable in the direction of and substantially perpendicular to the substantially flat surface, and wherein the pointed projections are arranged in a density of 10-50 projections/cm^{2.}

8. Apparatus according to claim 7, wherein the pointed projections are arranged in a density of 20-40 projections/cm².

## Patentansprüche

1. Verfahren zum Herstellen von Katalysatorkörpern, insbesondere Katalysatorflocken, insbesondere zum Experimentieren mit hohem Durchsatz, wobei das Verfahren die Schritte aufweist:
a) Herstellen einer Mischung, die Katalysatorkomponenten aufweist;
b) Verteilen der Mischung auf einer im wesentlichen ebenen Fläche;
c) Zusammendrücken der Mischung zu einer im wesentlichen ebenen Platte gleichmäßiger Dicke durch Ausüben auf die Mischung, die nach Schritt b) erhalten wird, eines Drucks von mindestens 50 kg/cm²;
d) Zerbrechen der Platte in Partikel, **dadurch gekennzeichnet, daß** im Schritt d) eine Punkbelastung auf mehrere Positionen auf der Platte ausgeübt wird, wobei die Positionen voneinander beabstandet sind, wobei die Platte in einen Partikelstoff mit Abmessungen zerbrochen wird, die durch den Abstand zwischen den Positionen definiert sind.

2. Verfahren nach Anspruch 1, wobei im Schritt c) der Druck zwischen 100-4000, vorzugsweise zwischen 100-1500 kg/cm² beträgt.

3. Verfahren nach einem der vorhergehenden Ansprüche, wobei im Schritt d) der Partikelstoff zu einer durchschnittlichen Teilchengröße von höchstens 5 mm, vorzugsweise zwischen 0,05-1,0 mm, besonders bevorzugt zwischen 0,1-0,5 mm zerbrochen wird.

4. Verfahren nach einem der vorhergehenden Ansprüche, wobei der Abstand zwischen den Positionen höchstens 5 mm, vorzugsweise zwischen 0,05 und 1,0 mm, besonders bevorzugt zwischen 0,1 und 0,5 mm beträgt.

5. Verfahren nach einem oder mehreren der vorhergehenden Ansprüche, wobei im Schritt c) die Mischung so zusammengedrückt wird, daß eine Dicke von weniger als 2 mm erhalten wird, die vorzugsweise zwischen 0,05 und 0,3 mm liegt.

6. Verfahren nach einem der vorhergehenden Ansprüche zum Herstellen mehrerer unterschiedlicher Katalysatorkörper, wobei Schritt a) das Herstellen mehrerer Mischungen aufweist, die Katalysatorkomponenten aufweisen, und wobei mindestens einer und vorzugsweise alle der Schritte a) - d) parallel durchgeführt werden.

7. Vorrichtung zur Herstellung von Katalysatorkörpern nach einem der Ansprüche 1-6, die aufweist: eine im wesentlichen ebenen Fläche, ein Preßvorrichtung, die einen Stempel aufweist, der dazu bestimmt ist, einen Druck auf die im wesentlichen ebene Fläche auszuüben, und ein Brechelement, das spitze Vorsprünge aufweist, wobei das Brechelement so angeordnet ist, daß die spitzen Vorsprünge in die Richtung der und im wesentlichen senkrecht zu der im wesentlichen ebenen Fläche beweglich sind, und wobei die spitzen Vorsprünge in einer Dichte von 10-50 Vorsprüngen/cm² angeordnet sind.

8. Vorrichtung nach Anspruch 7, wobei die spitzen Vorsprünge in einer Dichte von 20-40 Vorsprüngen/cm² angeordnet sind.

## Revendications

1. Procédé de préparation de corps catalyseurs, en particulier des paillettes de catalyseur, pour des expériences à rendement élevé en particulier, lequel procédé comprend les étapes consistant à :
a) préparer un mélange contenant des composants de catalyseur ;
b) répartir le mélange sur une surface sensiblement plane ;
c) compresser le mélange de façon à former une plaque sensiblement plane, d'épaisseur uniforme, en appliquant sur le mélange, obtenu au terme de l'étape b) une pression d'au moins 50 kg / cm² ;
d) décomposer la plaque en particules, **caractérisé en ce que**, à l'étape d) une charge concentrée est appliquée sur une pluralité de positions sur la plaque, lesdites positions étant espacées les unes par rapport aux autres, la plaque étant décomposée en des particules de dimension définie par la distance entre lesdites positions.

2. Procédé selon la revendication 1, dans lequel, à l'étape c) la pression est comprise entre 100 et 4000 kg / cm², de préférence entre 100 et 1500 kg / cm².

3. Procédé selon l'une quelconque des revendications précédentes, dans lequel, à l'étape d) les particules sont décomposées à une taille de particules moyenne de 5 mm au plus, de préférence entre 0,05 et 1,0 mm, et de façon plus préférentielle entre 0,1 et 0,5 mm.

4. Procédé selon l'une quelconque des revendications précédentes, dans lequel la distance entre lesdites positions est de 5 mm au plus, de préférence entre 0,05 et 1,0 mm, et de façon plus préférentielle entre 0,1 et 0,5 mm.

5. Procédé selon une ou plusieurs des revendications précédentes, dans lequel, à l'étape c) le mélange est compressé de telle sorte qu'une épaisseur de moins de 2 mm est obtenue, l'épaisseur étant comprise de préférence entre 0,05 et 0,3 mm.

6. Procédé selon l'une quelconque des revendications précédentes, pour la préparation d'une pluralité de différents corps catalyseurs, dans lequel l'étape a) comprend l'étape consistant à préparer une pluralité de mélanges comprenant des composants de catalyseur, et dans lequel au moins une et, de préférence, toutes les étapes a) à d) sont accomplies en parallèle.

7. Appareil pour la préparation de corps catalyseurs selon l'une quelconque des revendications 1 à 6, comprenant une surface sensiblement plane, un dispositif de pressage comprenant un pilon adapté pour exercer une pression sur ladite surface sensiblement plane, et un élément cassant comprenant des projections pointues, l'élément cassant étant agencé de telle sorte que les projections pointues peuvent se déplacer dans la direction de et sensiblement perpendiculairement à la surface sensiblement plane, et dans lequel les projections pointues sont disposées dans une densité de 10 à 50 projections / cm².

8. Appareil selon la revendication 7, dans lequel les projections pointues sont disposées dans une densité de 20 à 40 projections / cm².
